(19)

**Europäisches Patentamt**
**European Patent Office**
**Office européen des brevets**

(11) **EP 4 621 888 A1**

# (12) EUROPEAN PATENT APPLICATION

(43) Date of publication:
**24.09.2025 Bulletin 2025/39**

(21) Application number: **24382316.8**

(22) Date of filing: **22.03.2024**

(51) International Patent Classification (IPC):
*H01M 4/90* (2006.01)   *C25B 1/04* (2021.01)
*C25B 11/053* (2021.01)   *C25B 11/091* (2021.01)
*C25B 11/052* (2021.01)   *C25B 11/067* (2021.01)
*C25B 11/077* (2021.01)   *H01M 4/86* (2006.01)
*H01M 4/88* (2006.01)

(52) Cooperative Patent Classification (CPC):
**H01M 4/9016; C25B 1/04; C25B 11/052;**
**C25B 11/057; C25B 11/067; C25B 11/077;**
**C25B 11/091; H01M 4/366; H01M 4/8642;**
**H01M 4/8825**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Matteco Team S.L.**
  **46021 Valencia (ES)**
• **Universidad de Valencia**
  **46010 Valencia (ES)**

(72) Inventors:
• **Romero Pascual, Jorge**
  **Valencia (ES)**
• **Abellán Sáez, Gonzalo**
  **Valencia (ES)**
• **Seijas Da Silva, Alvaro**
  **Valencia (ES)**

(74) Representative: **Pons IP**
**Glorieta Rubén Darío 4**
**28010 Madrid (ES)**

(54) **A LAYERED DOUBLE HYDROXIDE ELECTRODE, A PROCESS FOR THE OBTAINMENT AND USES THEREOF**

(57)    The invention relates to a new electrode comprising a layered double hydroxide and its procedure of obtainment and uses thereof. The electrode is characterized by a compositional gradient and extended defects that provides to said new electrode an increase in the electrochemical surface area (ECSA) compared to conventional electrodes and therefore a high performance towards the oxygen evolution reaction (OER).

EP 4 621 888 A1

## Description

The invention relates to a new electrode comprising a layered double hydroxide and its procedure of obtainment and uses thereof. The electrode is characterized by a compositional gradient and compositional extended defects that provides to said new electrode an increase in the Electrochemical Surface Area (ECSA) compared to conventional electrodes and therefore a high performance towards the oxygen evolution reaction (OER).

## BACKGROUND ART

Hydrogen production by means of alkaline electrolyzers is one of the most viable alternatives for the production of green hydrogen. However, in order to achieve an industrial production of interest, it is essential to have efficient and stable catalysts, capable of withstanding the harsh conditions to which they are exposed in the electrolyzers (high current density, high temperatures, long times of use, etc.). In this sense, layered double hydroxides have proven to be highly efficient catalysts under these conditions and a more than possible substitute for the current noble metal-based electrodes, which are much more expensive and geolocalized. For their implementation, the use of metallic conductive electrodes is required, nickel being one of the most widely used due to its ability to withstand such conditions.

In view of the growing demand for renewable hydrogen, set out in the European Community Hydrogen Strategy, which sets ambitious targets such as achieving at least 6 GW of renewable hydrogen by 2024 and 40 GW by 2030 through electrolyzers, the present invention becomes an innovative and efficient solution for the large-scale production of electrodes coated with lamellar hydroxides for the production of hydrogen from different electrolysis technologies in alkaline medium, such as exchange membrane electrolysis and conventional electrolysis.

To date, the most economical and common method to deposit these catalysts on electrodes is by means of standard deposition techniques, such as, for example, sputtering, requiring stable inks and the incorporation of costly binding additives. In numerous instances, employing these inks and additives proves counterproductive concerning the catalytic efficacy of the electrode. This is attributed to the fact that, firstly, they consist of insulating polymers that exhibit low stability under highly alkaline conditions (pH>13, as for example KOH 6-7 M). Secondly, attempts to mitigate their insulating characteristics by using minimal quantities result in eventual detachment of the electrode material over prolonged periods. Additionally, it's important to highlight that employing conventional deposition techniques involving inks lacks the establishment of direct contact (chemical bond) between the electrode and the deposited material. Consequently, this leads to increased resistivity within the system, resulting in a poorer catalytic behavior. One of the solutions being developed to solve these issues is the growth of layered hydroxides directly on the electrodes, which is carried out at high temperatures in reactors that withstand high pressures (i.e. autoclaves). These complex reaction conditions limit the size, shape, and composition of the metal electrodes, as well as it increases the production costs due to the need to acquire expensive specialized equipment and the need to create special secure working conditions. Some of the closest attempts to grow these hydroxide laminated materials in the state of the art are: in Daojin Zhou et al. research [Daojin Zhou et al., "Gradient in NiFe layered double hydroxide nanoarrays for efficient oxygen evolution", Nanoenergy (2019), 60, 661-666] wherein it discloses an electrocatalyst comprising Ni and Fe layered hydroxides (LDH), both non-gradient electrodes NiFe-LDH and nickel-iron electrodes with concentration gradients ("NiFe-LDH nanoarrays"). NiFe-LDH nanoarrays are described by a gradient of increasing iron concentration in the electrocatalyst layer as we move away from the substrate or bottom, "*leading to higher Ni:Fe ratio in NiFe-LDH attached to Ni foam" "growing concentration of Fe along with increasing electron density of both Ni and Fe from the bottom to the top of NiFe-LDH...*". And on the other hand, the PCT patent application [WO2022171855A1], wherein it discloses a layered hydroxide which can be Ni and Fe (see example of NiFe-LDH in section "examples: materials and methods"), wherein said lamellar hydroxide presents defects such as Fe clustering ("for the highest Fe concentrations accessible for LDH phases Ni: Fe, 2: 1, like in the present case), significant Fe clustering (AF Fe-OH-Fe pairs) occurs", and where said NiFe-LDH presents improved ECSA with respect to other state-of-the-art NiFe-LDHs ("An ECSA of 3 mFcm$^{-2}$ has been obtained for the NiFe LDH, a value much higher than those typically observed for state-of-the-art bulk NiFe-LDHs").

However, both attempts present the following problems:
In the case of the materials presented in "Gradient in NiFe layered double hydroxide nanoarrays for efficient oxygen evolution", [Nanoenergy (2019), 60, 661-666], the gradient on the electrodes causes a higher concentration of Nickel (Ni) (lower concentration of Fe) on the surface of the substrate and a lower concentration of Ni on the outside surface (higher concentration of Fe) causing the material to be active towards the oxygen evolution reaction.

The PCT patent application [WO2022171855A1] is mainly focused on powder catalysts that need to be processed by typical coating or deposition industrial techniques to achieve an electrode to be used in the oxygen evolution reaction (OER). In addition, it is disclosed in said patent application the presence of a clustering of the trivalent cation (B$^{III}$, in some examples the Fe$^{III}$) and which is determined, among other techniques, by the presence of by a single peak in the range from 3 to 4 Å measured through hard X-ray absorption nearedge spectroscopy (XANES). In the case of the electrodes grown on substrate, the resulting electrodes cannot show a gradient due to the reaction conditions at which it is synthesized. This lack of Ni:Fe gradient in the electrode composition leads to a lower catalytic activity.

## SUMMARY OF THE INVENTION

The present invention discloses a novel catalytic conductive electrode coated with layered double hydroxides with a high Electrochemical Surface Area (ECSA) and high conductivity due to the direct synthesis of the catalytic layer on the electrode at room temperature. This technique allows the growth of the hydroxides directly on the electrodes/substrates, presenting an intimate contact with the substrates and thus avoiding use of less efficient deposition techniques. Being the reaction conditions at ambient temperature and pressure, energy costs are much lower than the traditional methods mentioned previously. In addition, this methodology allows the industrial scale production of large electrodes, regardless of their shape, since the synthesis and deposition on the electrode can be carried out in very simple reactors based even on polymeric matrices (custom designed), which cannot be done with the current processes.

A first aspect of the present invention related to an electrode characterized in that it comprises

- an electrically conductive substrate,
- a first layer comprising a Ni/Fe oxyhydroxide ($Ni_x/FeOOH_y$) with a thickness between 1 nm and 5 $\mu$m, preferably between 1 nm and 1 $\mu$m, and with atomic ratio from 0.6 to 2 and wherein said first layer comprising a first and a second surface, a first surface is in contact with the surface of the substrate and wherein a second surface is opposite to the first surface in the direction defined by the thickness of the first layer; and
- a second layer, configured to be the electrocatalytic layer, comprising a NiFe layered double hydroxides with a thickness between 10 nm and 10 $\mu$m, wherein said second layer comprising a first and a second surface, wherein the first surface is in contact with the second surface of the first layer, and wherein the second surface is opposite to the first surface in the direction defined by the thickness of the electrocatalytic layer;

wherein the layers as a whole comprise a Ni/Fe atomic ratio with an average value between 1.9 and 3.0;
wherein the Ni/Fe ratio composition of the first surface of the second layer is between 2.0 and 2.5 of Ni/Fe atomic ratio and the Ni/Fe atomic ratio composition of the second layer at the second surface is between 3.8 and 7.0, preferably 3.8 and 6.0, more preferably 3.8 and 4 of Ni/Fe atomic ratio; and
wherein the relationship between the substrate and the first layer is through an LDH oxyhydroxide covalent bonding; and
wherein preferably the atomic structure of the second layer comprising

- a clustering of $Fe^{3+}$; and
- an extensive stacking fault type defect.

The material presents structural defects both in stacking due to the fact that the thickness of the material prevents the repetition in space as well as the asymmetric orientation of the same, which added to the very small crystalline domain generates such extensive defect of lack of stacking, in addition, the material presents morphological defects as well as clustering in the plane. The presence of the $Fe^{3+}$ cluster, i.e. the appearance of the Fe(III)-OH-Fe(III) motif in the atomic ordering of the second layer material (or Fe(III)-clustering) is only observed in samples obtained by the method described in the present invention, and which is already characterized by different characterization in patent application [WO2022171855A1], and in no case appears in typical samples obtained through conventional hydrothermal processes which do not disclose such Fe(III)-clustering. Fe is only in oxidation state 3, therefore, the cluster formed in the product of the present is always of trivalent cations.

The advantage of the electrode conformation described in the present invention is that the electrode has an electrochemical surface area of at least between 80 and 100 $cm^2$/mg. The combination of the compositional gradient, i.e., the gradient on the electrodes causes a higher concentration of Fe (Fe) (lower concentration of Ni) on the surface closer to the substrate (and the first layer) and a lower concentration of Fe on the second surface (higher concentration of Ni) of the second layer causing the material to be more active towards the oxygen evolution reaction compared to the inverse gradient proposed in [Nanoenergy (2019), 60, 661-666], together with the higher ECSA, the covalent connection with the substrate and the presence of defects, synergistically favors a better electrode performance.

All thickness measurements performed in the present invention are carried out by direct measurement by electron microscopy, in the present invention by direct measure by transmission electron microscopy.

In another preferred embodiment the electrically conductive substrate is selected from metallic, and carbonaceous material. More preferably the electrically conductive substrate is metallic material selected from nickel, nickel foam, nickel meshes, nickel fibres, stainless steel, titanium, Ni/Al alloy and any combination of thereof.

The term "atomic ratio" as used herein refers to the measure of the ratio of atoms of one kind (i) to another kind (j). This value is measured by ICP and EDX, on the substrate by EDX, after performing a FIB-SEM in order to see the layered structure.

A second aspect of the present invention is a procedure to obtain the electrode, characterized in that it comprises the following steps:

a) preparing a saline solution of a Ni and Fe salt, and a halide salt wherein the range of the total salt concentration is between 50 mM and 375 mM and wherein the ratio of iron to nickel in the initial salt solution is adjusted in a range from 25% iron to 99% iron in weight;

b) immerse a substrate, previously cleaned, in the saline solution obtained in (a) while stirring for at least 20 minutes at a temperature of between 25 ºC and 100 ºC;

c) adding an alkylating agent to the solution obtained in (b) with the substrate submerged with an alkylating agent and halide salt concentration is more than twice of the total metal salt concentration, and keeping in agitation between 1 hours and 168 hours, preferably between 12 h and 24 h, at a temperature between 10 ºC and 40 ºC, and wherein the total volume of the complete solution and the substrate are between 1 mL/cm$^2$ and 6 mL/cm$^2$;

d) washing and drying the electrode obtained in (c);

e) optionally, annealing the dry electrode obtained in (d) at a temperature of between 81 ºC and 190 ºC.

One of the most important advantages that can be defined as intrinsic to the process of the present invention is the range of the temperature at which the layered double hydroxides can be obtained with the presence of high concentration of iron clustering. At the same time, this temperature allows both the obtaining of the extensive defects in the atomic structure of the second layer described above of the Fe3+ clustering and the extensive, as well as the obtention of an electrode with a gradient as described previously, also responsible for its high electrochemical activity in the oxygen evolution reaction. The advantage associated with the optional step e) is the partial crystallization of the electrode obtained, which leads to a higher mechanical resistance at working temperatures of the electrode, which are higher than 100 ºC, since it prevents its degradation during its use.

In a preferred embodiment of the procedure the cleaning of the substrate is carried out with ozone, corona treatment, plasma treatment, cleaning with acid solutions, cleaning with basic solutions, cleaning with organic solvents, cleaning with the dissolution of metallic salts from the reaction. Preferably the cleaning is with organic solvents. More preferably is acetone.

In another embodiment of the procedure the halide salt is selected from NaCl, KCl, NaBr and NaI.

In another embodiment of the procedure the alkylating agent is selected from ethylene oxide, propylene oxide, 1,2-butylene oxide, glycidaldehyde, glycidol, styrene oxide, diglycidyl resorcinol ether, trimethylene oxide and miscellaneous epoxides and any combination thereof.

In another embodiment of the procedure the alkylating agent:sodium chloride concentration ratio in step (c) is between 1:100 and 100:1, preferably 30:70 and 60:40. The advantage associated with the described ratio is the increase in reaction rate.

In another embodiment of the procedure drying the electrode obtained in (d) is carried out between 20-80°C from 2 hours to 24 hours.

In another embodiment of the procedure the washing in step (d) is carried out with water.

Through this procedure of the invention, we obtain the material with the technical characteristics previously described, which give rise to its use as an electrode and therefore, a third aspect of the present invention is the electrode of the present invention obtained by the procedure described above.

A fourth aspect of the present invention is the use of the electrode described above in general electrochemical application, preferably in an electrolyzer, fuel cell or battery device.

A fifth aspect of the present invention is the use of the electrode described above in general electrochemical application, preferably in an oxygen evolution reaction (OER).

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

**BRIEF DESCRIPTION OF THE DRAWINGS**

**Fig. 1.** Scheme of the electrode obtained in Example 1.

**Fig. 2.** Ni/Fe catalyst grown on nickel metal at 100 °C using urea as pH modulus. Ni appears as the brightest part of the image and Fe as the least bright according to their atomic numbers.

**Fig. 3.** Ni/Fe catalyst grown on nickel metal at room temperature using the method to be patented. Nickel to iron ratios determined by energy dispersive X-ray spectroscopy in the catalytic layer. Ratio of nickel to iron determined in the initial synthesis solution by inductively coupled plasma-mass spectrometry. Ni appears as the brightest part of the image and Fe as the least bright according to their atomic numbers.

**Fig. 4.** Determination of double layer capacitance for conventional deposited electrodes.

**Fig. 5.** Determination of double-layer capacitance for grown electrodes following the example 1.

**Fig. 6.** X-ray photoelectron spectroscopy study of electrode according to document WO and new patent catalysts on nickel metal substrate according to example 1 of present invention.

**Fig. 7.** Current data at 1.55 V vs RHE extracted from document [Daojin Zhou et al., "Gradient in NiFe layered double hydroxide nanoarrays for efficient oxygen evolution", Nanoenergy (2019), 60, 661-666]

**Fig. 8.** Polarization curve of electrode grown as described in example 1.

**Fig. 9.** Polarization curve of electrode grown as described in example 1 (dark circles spot) in comparison with bare Ni fibers (square spot) and NiFe-LDH deposited (not grown) on Ni substrate (grey circles spot).

## Examples

### Example 1

Conditions used: initial total salt concentration of 100 mM: 66 mM $NiCl_2 \cdot 6H_2O$ sigma aldrich and 33 mM $FeCl_3 \cdot H_2O$ sigma aldrich, solvent water MQ, total volume of solution 1 mL per square centimeter, substrate 100 square centimeters of 1 mm thick nickel foam RECEMAT, a NaCl sigma aldrich concentration of 600 mM and a glycidol Thermo Scientific Chemicals concentration of 400 mM.

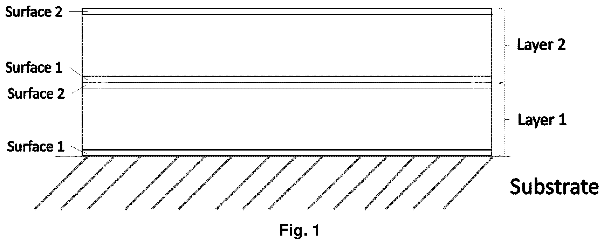

Cleaning the substrate using acetone, and preparing a saline solution of Ni, Fe, and Na chlorides; immerse the substrate in said saline solution while stirring for 20 minutes at a temperature of 20 ºC; then adding glycidol to the solution obtained in (b) with the substrate submerged in a alkylating agent and sodium chloride ratio of 4:6 and keeping in agitation for at least 24 hours at a temperature between 10 ºC and 30 ºC. The electrode obtained (the schematic of the product obtained can be seen in figure 1) is washed and after dried; an annealing of the dry electrode at a temperature of 190 ºC is carried out in order to crystallize the electrode.

### Example 2

The gradient in iron concentration across the catalytic layer is a parameter that can be defined as intrinsic to the product obtained according to example 1 and that cannot be achieved with high-temperature lamellar hydroxide synthesis.

The range that can be defined for the iron gradient is from 60% iron (the sum of nickel and iron being 100%) in the vicinity of the nickel substrate to 20% (the sum of nickel and iron being 100%) iron in the most superficial zone.

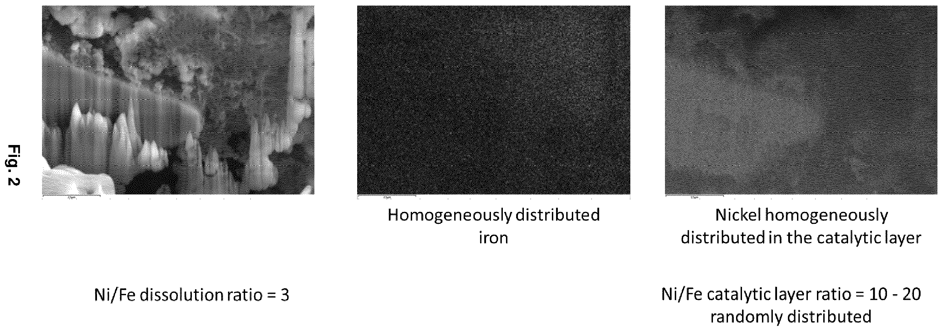

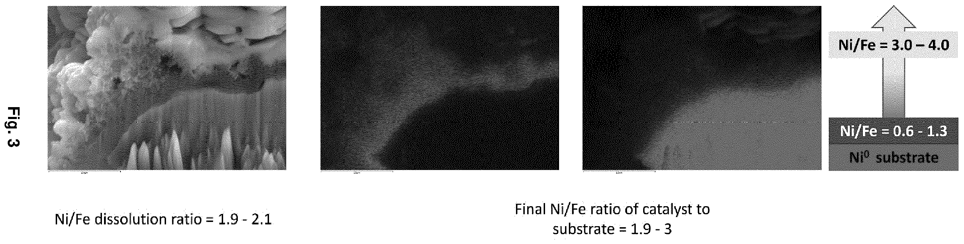

The use of a synthetic route carried out at room temperature, as is the case of example 1, is one of the main causes for the Fe gradient so characteristic of the electrodes of this invention and differentiates it from all the electrodes obtained by thermal methods (temperatures higher than 60 ºC). Layered double hydroxides are thermodynamically favorable phases (Struct Bond (2006) 119: 1-87), i.e., as the temperature increases, they recrystallize in order to achieve a perfect ordering consequently the catalytic layer formed at these temperatures through the direct growth on a nickel substrate does not present a gradient. To demonstrate this effect, a catalyst grown on a nickel substrate at 100 degrees Celsius and using urea as pH modifier (Fig. 2) is compared to the electrode obtained by the method to be patented (see figure 3). Clearly, the formation of a homogeneous layer appears in the first case and the appearance of different layers in the second, clearly, it appears the formation of a homogeneous layer in the first case and the appearance of distinct layers in the second, which are a first layer comprising a Ni/Fe oxyhydroxide (Nix/FeOOHy) with atomic ratios from 0.6 to 2 and a second layer, configured to be the electrocatalytic layer, comprising layered double hydroxides wherein the Ni/Fe ratio composition of the first surface of the second layer is between 2. 0 and 2.5 of Ni/Fe atomic ratio and the Ni/Fe ratio composition of the layered double hydroxide at the second surface is between 3.8 and 4.

### Example 3. Electrochemical surface area determination

The electrochemical active surface area (ECSA) was estimated according to the following equation:

$$ECSA = C_{dl}/C_s \qquad \text{Equation 1}$$

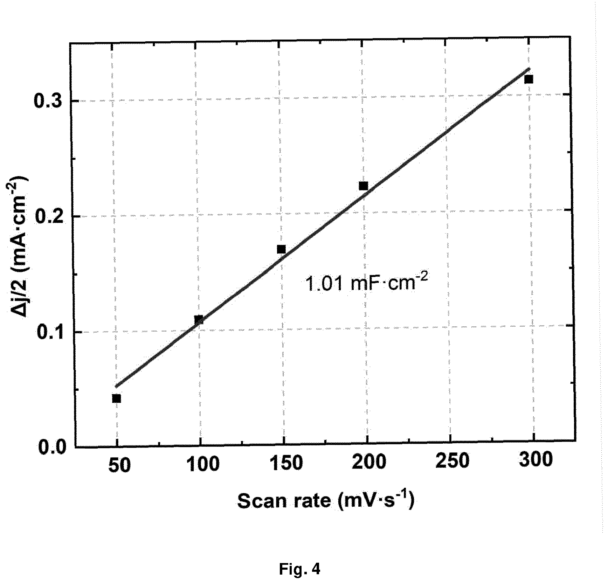

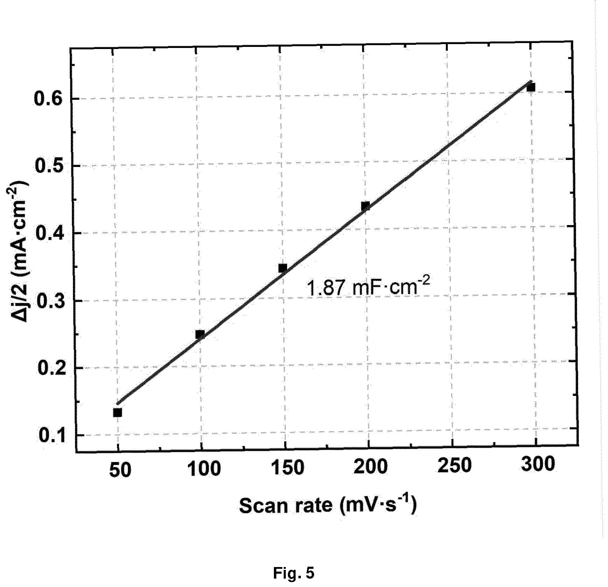

Wherein $C_{dl}$ is the double layer capacitance of the catalyst and Cs represents the specific capacitance of the electrode, which according to bibliographic data is 0.022 mFcm-2. $C_{dl}$, on the other hand, was determined from the dependence of the current on the sweep speed in non-faradaic regions. This determination was carried out on the electrodes using cyclic voltammetry in a potential range from 0.9 to 1.2 V versus RHE at sweep speeds of 50, 100, 200 and 300 mV/s. Finally, the double layer capacitance was calculated by fitting to a straight line the difference between anodic currents and cathodic currents divided by 2 [(ja - jc)/2] at 0.105 V vs. RHE as a function of sweep speed. Figure 4 and 5 shows the respective calculation for conventional deposited electrodes and for the electrodes of the present invention:

Figure 4 shows capacitance for conventional deposited electrodes wherein the obtained capacitance is 1.01 mFcm$^{-2}$.

Figure 5 shows capacitance for grown electrodes following the example 1 wherein the obtained capacitance is 1.87 mFcm$^{-2}$.

Table 1 shows a summary of the ECSA values obtained from the data presented and Equation 1.

Table 1. ECSA is determined for the deposited and grown electrodes.

| Type of electrodes | ECSA (cm$^2$) |
|---|---|
| Electrodes deposited with catalyst | 45,64 |
| Grown electrodes | 85,41 |

In summary, the patent process increases the ECSA of an electrode by 88% using the same active catalyst.

**Example 4. Determination of conductivity for electrodes grown according to Example 1 with a total salt concentration of 50 mM and electrodes grown in a total salt concentration of 15 mM (Comparative example with patent application WO2022171855A1).**

Measurement of the electrical resistance over the catalytic layer using a spike system is an accurate technique for discerning disparities in electron conduction between samples. It is understood that mixed hydroxides of NiFe or LDHs tend to be inherently insulating. However, by establishing an intimate connection with a metallic nickel substrate, an improvement in their electrical conductivity is anticipated.

The presence of a covalent bond between the hydroxide and the nickel metal substrate through the first oxyhydroxide layer leads to a system with lower electrical resistance, and therefore higher conductivity, compared to cases where this bond is absent.

The electrical resistance determined by two tips of the two catalytic layers, first one for the case according to example 1 of the present invention with a prepared saline solution of a Ni and Fe salt, and a halide salt with the range of the total salt concentration is 50 mM wherein the electrical resistance is 0.4 ohm and in comparison to second case according to the WO2022171855A1 patent application in a grown example directly on the Surface (without the oxyhydroxide first layer) with a prepared saline solution of a Ni and Fe salt, and a halide salt with the range of the total salt concentration is 15 mM, wherein the electrical resistance is 1.7 ohm.

**Example 5. X-Ray Photoelectron Spectroscopy**

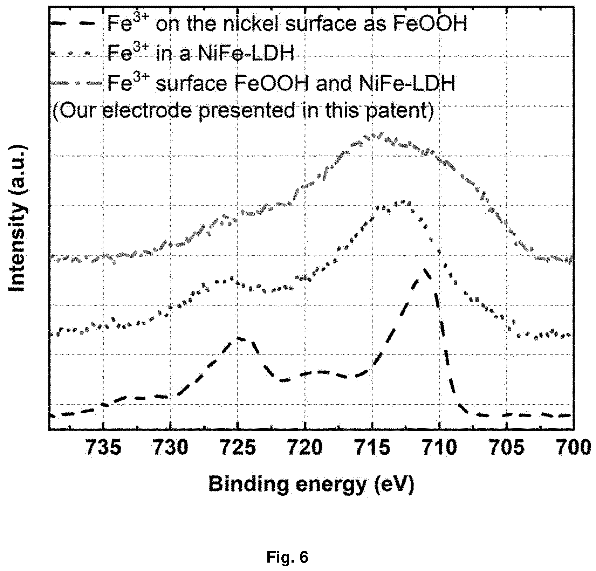

This technique allows discerning with significant differences between the deposited material, a NiFe(2:1)-LDH was used deposited by spraying on a physical nickel metal substrate, and the material obtained by the method proposed in example 1 of an LDH grown on a substrate. The analysis of the data and the position of the peaks reveals substantial differences between the two catalysts. (Fig. 6)

It is important to highlight that, although in both cases the iron is in an $Fe^{3+}$ oxidation state, in the case of the method proposed in this invention, distinctive features are observed through XPS.

First, to determine the composition (concentration of different metals) in the vicinity of the substrate, the reaction is stopped after iron precipitation. In this case a binding energy at 711.08 eV characteristic of the FeOOH phase is identified on the metallic nickel surface.

Second, in the case of a complete reaction, XPS analysis shows the distinct features of an FeOOH phase, confirming the presence of the oxyhydroxide in the sample. In this case, XPS also shows the characteristic contributions of a Ni:Fe phase with a 2:1 ratio (centered at 713.08 eV), as well as the presence of iron with a higher nickel content in the surrounding which is identified by contributions to the envelope at higher energies.

All these results confirms the presence of the FeOOH phase as well as a Ni:Fe phase with a ratio of 2:1 (centered at 713.08 eV).

These results, supported by gradient analysis through X-ray energy dispersive, underline the uniqueness of the present invention and explains the catalytic effectiveness of the catalysts proposed in the present patent.

The identification of these structural and compositional differences between the deposited catalyst and the catalyst obtained by the new method strengthens the rationale for this innovation.

**Example 6. Comparative analysis of catalytic activity between the electrode depicted in Nano Energy 60 (2019) 661-666 and the electrode grown on a substrate as per Example 1.**

The differences with respect to the electrode presented in Nano Energy 60 (2019) 661-666 lie in the distinctive composition and chemical gradient between the two electrodes. In our case, the compositional gradient is inverted to that of the electrode presented in Nano Energy 60 (2019) 661-666, implying a higher Fe concentration in the vicinity of the metallic nickel (see Figure 3).

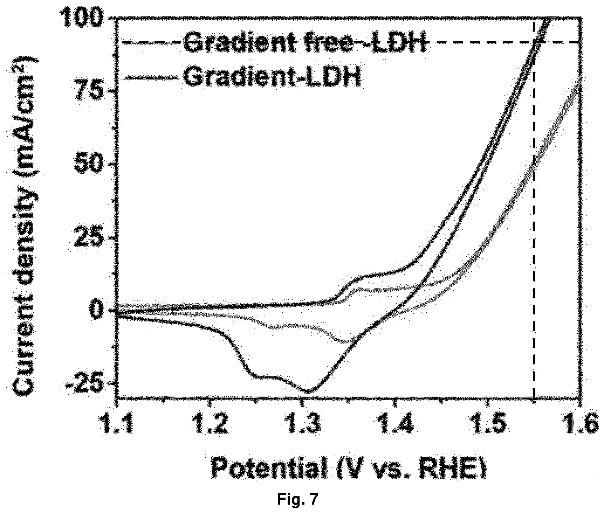

This inverse chemical gradient provides a number of technical advantages. For example, having a higher Fe concentration in the vicinity of the metallic nickel improves the efficiency of these electrodes applied to the oxygen evolution reaction. Specific values show that while the Nano Energy 60 (2019) 661-666 file electrode achieves a current of 90 mA/cm$^2$ at 1.55 V vs RHE (see Figure 7 black line), our electrode achieves the same current at a lower potential of 1.49 V vs RHE (see Figure 7 grey line).

This chemical difference is fundamental, as it demonstrates a significant innovation in our catalytic electrode. The optimization of the composition gradient in our electrode boosts its performance and opens new opportunities in the design of more efficient and effective catalytic systems for a wide range of industrial and scientific applications.

**Example 7. OER response**

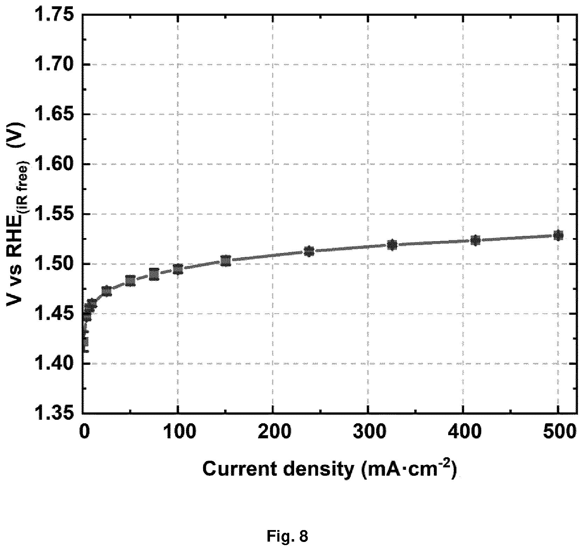

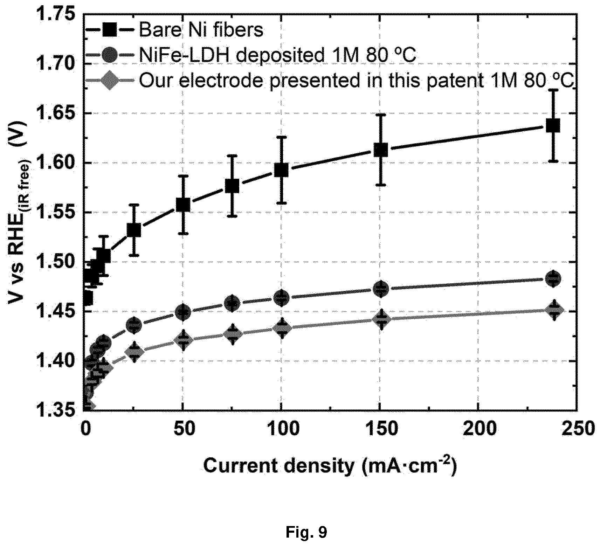

In this case, the electrode obtained following the example 1 (fig. 8) demonstrated a significant performance improvement compared to both a pure Nickel electrode and one with deposited material, particularly in terms of catalytic activity (fig. 9). As depicted in Figure 9, the electrode described in this patent showed a remarkable enhancement of 32 mV at 238 mA/cm2 compared to a substrate coated with high clustering LDH, and a 187 mV improvement over the bare nickel electrode.

**Claims**

1. An electrode **characterized in that** it comprises

   • an electrically conductive substrate;
   • a first layer comprising a NiFe oxyhydroxide ($Ni_x/FeOOH_y$) with a thickness between 1 nm and 5 $\mu$m, preferably between 1 nm and 1 $\mu$m, and with a Ni/Fe atomic ratio from 0.6 to 2 and wherein said first layer comprising a first and a second surface, a first surface is in contact with the surface of the substrate and wherein a second surface is opposite to the first surface in the direction defined by the thickness of the first layer; and
   • a second layer, configured to be the electrocatalytic layer, comprising a NiFe layered double hydroxides with an equivalent thickness between 10 nm and 10 $\mu$m, wherein said second layer comprising a first and a second surface, wherein the first surface is in contact with the second surface of the first layer, and wherein the second surface is opposite to the first surface in the direction defined by the thickness of the second layer;
   wherein the layers as a whole comprise a Ni/Fe atomic ratio with an average value between 1.9 and 3.0;
   wherein the Ni/Fe ratio composition of the first surface of the second layer is between 2.0 and 2.5 of Ni/Fe atomic ratio and the Ni/Fe atomic ratio composition of the second layer at the second surface is between 3.8 and 7.0, preferably 3.8 and 6.0, more preferably 3.8 and 4 of Ni/Fe atomic ratio;
   wherein the relationship between the substrate and the first layer is through an LDH oxyhydroxide covalent bonding; and
   wherein the atomic structure of the layered double hydroxide comprising

      - a clustering of $Fe^{3+}$; and
      - an extensive stacking fault type defect.

2. Electrode according to claim 1, wherein the substrate is selected from metallic, and carbonaceous material.

3. Electrode according to claim 2, wherein the substrate is metallic material selected from nickel, nickel foam, nickel fibres, stainless steel, titanium, Ni/Al alloy and any combination thereof.

4. A procedure to obtain the electrode, **characterized in that** it comprises the following steps:

   a) preparing a saline solution of a Ni and Fe salt, and a halide salt wherein the range of the total salt concentration is between 50 mM and 375 mM and wherein the ratio of iron to nickel in the initial salt solution is adjusted in a range from 25% iron to 99% iron in weight;
   b) immerse a substrate, previously cleaned, in the saline solution obtained in (a) while stirring for at least 20 minutes at a temperature of between 25 ºC and 100 ºC;
   c) adding an alkylating agent to the solution obtained in (b) with the substrate submerged with an alkylating agent and halide salt concentration is more than twice of the total metal salt concentration, and keeping in agitation between 1 hours and 168 hours, preferably between 12 h and 24 h, at a temperature between 10 ºC and 40 ºC, and wherein the total volume of the complete solution and the substrate are between 1 mL/cm$^2$ and 6 mL/cm$^2$;
   d) washing and drying the electrode obtained in (c);
   e) optionally, annealing the dry electrode obtained in (d) at a temperature of between 81 ºC and 190 ºC.

5. Procedure according to claim 4, wherein the cleaning of the substrate is carried out with ozone, corona treatment, plasma treatment, cleaning with acid solutions, cleaning with basic solutions, cleaning with organic solvents, cleaning with the dissolution of metallic salts from the reaction.

6. Procedure according to any of claims 4 or 5, wherein the halide salt is selected from NaCl, KCl, NaBr and NaI.

7. Procedure according to any of claims 4 to 6, wherein the alkylating agent is selected from ethylene oxide, propylene oxide, 1,2-butylene oxide, glycidaldehyde, glycidol, styrene oxide, diglycidyl resorcinol ether, trimethylene oxide and miscellaneous epoxides and any combination thereof.

8. Procedure according to any of claims 4 to 7, wherein the alkylating agent:sodium chloride ratio in step (c) is between 1:100 and 100:1, preferably 30:70 and 60:40.

9. Procedure according to any of claims 4 to 8, wherein drying the electrode obtained in (d) is carried out between 20-80°C from 2 hours to 24 hours.

10. Procedure according to any of claims 4 to 9, wherein the washing in step (d) is carried out with water.

11. Use of the electrode according to any of claims 1 to 3 in an in an electrolyzer, fuel cell or battery device.

12. Use of the electrode according to any of claims 1 to 3 in an oxygen evolution reaction (OER).

Fig. 1

**Fig. 2**

Fig. 3

Ni/Fe dissolution ratio = 1.9 - 2.1

Final Ni/Fe ratio of catalyst to substrate = 1.9 - 3

Ni/Fe = 3.0 – 4.0

Ni/Fe = 0.6 - 1.3

$Ni^0$ substrate

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/057716 A1 (PANASONIC IP MAN CO LTD [JP]) 21 March 2024 (2024-03-21)<br>* example 1 *<br>* Evaluation of Electrode *<br>----- | 1-12 | INV.<br>H01M4/90<br>C25B1/04<br>C25B11/053<br>C25B11/091 |
| Y | VÍCTOR OESTREICHER ET AL: "On Demand One-Pot Mild Preparation of Layered Double Hydroxides and Their Hybrid Forms: Advances through the Epoxide Route", CHEMISTRY - A EUROPEAN JOURNAL, JOHN WILEY & SONS, INC, DE, vol. 25, no. 54, 3 September 2019 (2019-09-03), pages 12611-12619, XP071849475, ISSN: 0947-6539, DOI: 10.1002/CHEM.201902627<br>* abstract *<br>* Experimental Section; page 12612 *<br>----- | 1-12 | C25B11/052<br>C25B11/067<br>C25B11/077<br>H01M4/86<br>H01M4/88 |

TECHNICAL FIELDS
SEARCHED      (IPC)

H01M
C25B

The present search report has been drawn up for all claims

| Place of search | Date of completion of the search | Examiner |
|---|---|---|
| The Hague | 5 December 2024 | Fodor, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 38 2316

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | Publication date |
|---|---|---|---|
| WO 2024057716 A1 | 21-03-2024 | JP WO2024057716 A1 | 21-03-2024 |
| | | WO 2024057716 A1 | 21-03-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022171855 A
- WO 2022171855 A1

**Non-patent literature cited in the description**

- **DAOJIN ZHOU et al.** Gradient in NiFe layered double hydroxide nanoarrays for efficient oxygen evolution. *Nanoenergy*, 2019, vol. 60, 661-666
- Gradient in NiFe layered double hydroxide nanoarrays for efficient oxygen evolution. *Nanoenergy*, 2019, vol. 60, 661-666
- *Nanoenergy*, 2019, vol. 60, 661-666
- *Struct Bond*, 2006, vol. 119, 1-87
- *Nano Energy*, 2019, vol. 60, 661-666